(19) Europäisches Patentamt
European Patent Office
Office européen des brevets

(11) **EP 3 257 894 B1**

(12) **EUROPEAN PATENT SPECIFICATION**

(45) Date of publication and mention
of the grant of the patent:
**23.08.2023 Bulletin 2023/34**

(21) Application number: **17173462.7**

(22) Date of filing: **30.05.2017**

(51) International Patent Classification (IPC):
**C08L 9/00** (2006.01)    **B60C 1/00** (2006.01)
**C08L 9/06** (2006.01)    **C08L 21/00** (2006.01)
**C08L 7/00** (2006.01)    **C08L 91/00** (2006.01)
**C08L 91/06** (2006.01)

(52) Cooperative Patent Classification (CPC):
(C-Sets available)
**B60C 1/00; B60C 1/0016; B60C 1/0025;
C08L 9/00; C08L 9/06; C08L 91/00; C08L 91/06**

(Cont.)

(54) **RUBBER COMPOSITION FOR TIRE AND PNEUMATIC TIRE**

KAUTSCHUKZUSAMMENSETZUNG FÜR REIFEN UND LUFTREIFEN DAMIT

COMPOSITION DE CAOUTCHOUC POUR PNEU ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.06.2016 JP 2016119037**

(43) Date of publication of application:
**20.12.2017 Bulletin 2017/51**

(73) Proprietor: **Sumitomo Rubber Industries, Ltd.
Kobe-shi, Hyogo-ken 651-0072 (JP)**

(72) Inventors:
• **KONISHI, Tomoko
Kobe-shi, Hyogo 651-0072 (JP)**
• **KAWAMURA, Takanobu
Kobe-shi, Hyogo 651-0072 (JP)**
• **SUGIMOTO, Mutsuki
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**JP-A- H1 158 548        JP-A- H11 246 706
KR-A- 20040 102 838    KR-A- 20050 051 007
US-A1- 2014 179 853**

(52) Cooperative Patent Classification (CPC): (Cont.)

C-Sets
**C08L 9/00, C08L 9/06, C08L 7/00, C08L 91/00,
C08L 91/06, C08K 3/04, C08K 3/36, C08K 5/548,
C08K 5/18, C08K 5/09, C08K 3/22, C08K 3/06,
C08K 5/47;
C08L 9/06, C08L 9/00, C08L 7/00, C08L 91/00,
C08L 91/06, C08K 3/04, C08K 3/36, C08K 5/548,
C08K 5/18, C08K 5/09, C08K 3/22, C08K 3/06,
C08K 5/47**

**Description**

BACKGROUND OF THE INVENTION

Field of the Invention

The present invention relates to a rubber composition for a tire, and a pneumatic tire in which the rubber composition is used.

Description of the Background Art

In general, rubber products are deteriorated due to ozone and oxygen in air, and cracking (cracks) occurs on the surface of the product. The crack progresses due to static and dynamic stress on the rubber product, resulting in the rubber material being broken.

In order to reduce such a crack, that is, in order to improve crack resistance, an antioxidant that easily reacts with ozone, and wax for forming a protection film on the surface of the rubber product are previously blended with a rubber product, particularly, a rubber composition (in particular, rubber composition, for a tire, used for a tread, sidewalls, clinches, and wings that are exposed to air in a use environment) used for a tire.

Unless an antioxidant or wax is bloomed on the surface, the effect of ozone resistance cannot be exhibited. In particular, unless wax is bloomed on the surface to form coating, the effect of ozone resistance cannot be exhibited. By increasing an amount of wax to be blended, the wax coating on the surface can be made thick. However, a problem arises that an outer appearance becomes poor due to whitening or the like.

In order to solve such a problem, a technique in which previously colored wax is blended for maintaining ozone resistance and simultaneously inhibiting whitening on a surface of a tire is suggested in Japanese Laid-Open Patent Publication No. 2014-12802 (hereinafter, referred to as Patent Literature 1).

In KR 2005 0051007 A and in US 2014/0179853 A1 rubber compositions are described, which include wax and 60 phr of carbon black.

SUMMARY OF THE INVENTION

To date, it has been assumed that the greater an amount of blended wax is, the higher crack resistance becomes. However, the inventors of the present invention have found, as a result of thorough study, that the thickness (an amount of wax bloomed on a surface) of coating of wax bloomed on the surface of the rubber is actually important, and, when an amount of wax bloomed on the surface is excessively great, crack is likely to occur in wax coating, and crack resistance may be reduced. Further, the inventors of the present invention have found, as a result of thorough study, that, in the technique disclosed in Patent Literature 1, although whitening can be prevented, the thickness of the coating of the wax bloomed on the surface is not changed, and cracking in the wax coating cannot be prevented, and there is a room for improving crack resistance.

An object of the present invention is to provide a rubber composition, for a tire, having good crack resistance and discoloration resistance, and a pneumatic tire in which the rubber composition is used, for solving the aforementioned problem.

The present invention is directed to a rubber composition, for a tire, which is exposed to air in a use environment, and the rubber composition includes wax and carbon black, wherein the content of the carbon black per 100 parts by mass of the rubber component is not greater than 40 parts by weight, and, after the rubber composition for a tire has been left for two weeks in a constant-temperature container in which a temperature is lower than a melting point of the wax by 30°C, a film thickness of the wax that is bloomed on a surface from the rubber composition for a tire is 0.2 to 1.5 $\mu$m.

In the rubber composition for a tire, a content of the wax per 100% by mass of the rubber composition is preferably 0.6 to 1.25% by mass.

In the rubber composition for a tire, after the rubber composition has been left outdoors for six months, a color difference (-(a*+b*)× 10) measured by using a color difference meter is preferably greater than -20.

The rubber composition for a tire is preferably used as a rubber composition for a tread, a rubber composition for a sidewall, a rubber composition for a clinch, and/or a rubber composition for a wing.

Further, the present invention is directed to a pneumatic tire having a tire member manufactured by using the above-described rubber composition.

The tire member is preferably a tread, a sidewall, a clinch, and/or a wing.

According to the present invention, the rubber composition for a tire is exposed to air in a use environment and includes wax, and, after the rubber composition for a tire has been left for two weeks in a constant-temperature container in which a temperature is lower than a melting point of the wax by 30°C, a film thickness of the wax that is bloomed on a surface from the rubber composition for a tire is 0.2 to 1.5 $\mu$m. Therefore, crack resistance and discoloration resistance are good, and a pneumatic tire having excellent crack resistance and discoloration resistance can be provided.

DESCRIPTION OF THE PREFERRED EMBODIMENTS

A rubber composition (rubber composition, for a tire, which is exposed to air in a use environment), for a tire, according to the present invention includes wax, and carbon black in a content not greater than 40 parts by weight, and, after the rubber composition for a tire has been left for two weeks in a constant-temperature container in which a temperature is lower than the melting point of the wax by 30°C, the film thickness of the wax that is bloomed on the surface from the rubber composition for a tire is 0.2 to 1.5 $\mu$m.

The entirety of the wax that is blended in the rubber composition is not bloomed on the surface of the rubber. After the surface has been coated to some degree, the wax is no longer bloomed, and the film thickness is stabilized. The inventors of the present invention have found, as a result of study, that wax has an optimum temperature at which blooming of the wax is promoted, and the optimum temperature is lower than the melting point of the wax by 20 to 30°C. Further, as a result of an amount of blooming being studied by using various kinds of waxes, it is found that, in a case where the rubber composition including the wax is left at the optimum temperature for two weeks, the wax is sufficiently bloomed, and a film thickness can be stabilized.

Further, as a result of correlation between the film thickness of the wax and actual use in the market being studied, in a case where the rubber composition for a tire is left for two weeks at a temperature that is lower than the melting point of the wax by 20 to 30°C, correlation with a state observed after about two years have elapsed in the market can be obtained, and it has been found that the greater an amount of blended wax is, the greater the film thickness of the wax is, and the greater the film thickness of the wax is, the further whitening progresses, and, however, although, up to a certain degree of the film thickness, the greater the film thickness is, the better crack resistance is, the wax film is likely to crack when the film thickness is excessively great, thereby reducing crack resistance. Further, it has been found that, for a rubber composition, for a tire, including wax, in a case where, after the rubber composition for a tire has been left for two weeks in a constant-temperature container in which the temperature is lower than the melting point of the wax by 30°C, the film thickness of the wax bloomed on the surface from the rubber composition for a tire is 0.2 to 1.5 $\mu$m, good ozone resistance is assured and wax coating can be simultaneously prevented from cracking in actual use in the market, and crack resistance and discoloration resistance can be maintained good in the actual use in the market, to complete the present invention.

The rubber composition, for a tire, according to the present invention includes wax.

The wax is not particularly limited, and may be, for example, petroleum wax or natural wax. Further, synthetic wax obtained by a plurality of waxes being refined or chemically treated can be used. Each of them may be used alone, or two or more of them may be used in combination.

Examples of the petroleum wax include paraffin wax and microcrystalline wax. The natural wax is not particularly limited and may be any wax derived from a material other than petroleum. Examples of the natural wax include plant waxes such as candelilla wax, carnauba wax, Japan wax, rice wax, and jojoba wax, animal waxes such as beeswax, lanolin, and spermaceti, mineral waxes such as ozokerite, ceresin, and petrolatum, and refined products thereof.

The rubber composition, for a tire, according to the present invention includes wax, and, after the rubber composition for a tire has been left for two weeks in a constant-temperature container in which the temperature is lower than the melting point of the wax by 30°C, the film thickness of the wax that is bloomed on the surface of the rubber composition for a tire, from the rubber composition for a tire, is 0.2 to 1.5 $\mu$m. Thus, crack resistance and discoloration resistance become good. Specifically, when the film thickness of the wax is less than 0.2 $\mu$m, crack resistance does not become good. When the film thickness of the wax is greater than 1.5 $\mu$m, the film of the wax is likely to crack and crack resistance and discoloration resistance do not become good.

The film thickness of the wax is preferably 0.3 to 1.5 $\mu$m, more preferably 0.5 to 1.2 $\mu$m, and even more preferably 0.8 to 1.0 $\mu$m.

A method in which the rubber composition is left for two weeks in a constant-temperature container in which the temperature is lower than the melting point of the wax by 30°C, and a method in which the film thickness of the wax is measured are implemented as described in examples.

In the description herein, the melting point of the wax represents the maximum peak temperature of a heat flow curve obtained by measuring heat flow (mW/g) at a temperature rise rate of 5°C/min from -0°C to 100°C, using a differential scanning calorimeter (DSC). When a plurality of waxes are blended, the melting point of the blended wax having the same wax composition as included in the rubber composition is measured. For example, in a case where a wax A and a wax B are blended in rubber at a ratio of 1:2, the melting point of the blended wax in which the wax A and the wax B are previously blended at the ratio of 1:2 may be measured.

In the rubber composition, for a tire, according to the present invention, a color difference (-(a*+b*)×10) measured by using a color difference meter after the rubber composition has been left outdoors for 6 months, is preferably greater than -20, more preferably greater than -10, and particularly preferably greater than 0. The upper limit of the color difference is not particularly limited. This means that the outer appearance can be inhibited from becoming poor due to, for example, whitening caused by the wax, and discoloration resistance can be improved.

A method in which the rubber composition is left outdoors for 6 months, and a method in which a color difference is measured by using a color difference meter are implemented as described in examples.

In order to set the film thickness of the wax so as to be within the above-specified range, and further set the color difference (-(a*+b*)×10) measured by the color difference meter after the rubber composition has been left outdoors for 6 months so as to be greater than -20, when the rubber composition is prepared, an amount of wax to be blended is preferably set to a specific amount.

The content (initial content, an amount of the wax blended when the rubber composition is prepared) of the wax is preferably 0.6 to 1.25% by mass per 100% by mass of the rubber composition and more preferably 0.65 to 1.20 % by mass per 100% by mass of the rubber composition. When the content of the wax is less than 0.6% by mass, crack resistance may not become good. When the content of the wax is greater than 1.25% by mass, the film of the wax is likely to crack and crack resistance and discoloration resistance may not become good.

When the content of the wax is within the above-described range, the film thickness of the wax can be advantageously adjusted so as to be within the above-described specific range. When the upper limit value of the content of the wax is set to the above-described amount, the color difference (-(a*+b*)×10) measured by using the color difference meter after the rubber composition has been left outdoors for 6 month can be advantageously made greater than -20.

Examples of a rubber component used for the rubber composition according to the present invention include diene rubbers such as isoprene-based rubbers, polybutadiene rubber (BR), styrene-butadiene rubber (SBR), styrene-isoprene-butadiene rubber (SIBR), ethylenepropylene-diene rubber (EPDM), chloroprene rubber (CR), acrylonitrile-butadiene rubber (NBR), and butyl rubber (IIR). Each of them may be used alone, or two or more of them may be used in combination. Among them, isoprene-based rubber, BR, or SBR is preferably used and isoprene-based rubber, BR, and SBR are more preferably used in combination, because the effect of the present invention can be more advantageously obtained.

Examples of the isoprene-based rubber include synthetic polyisoprene rubber (IR), natural rubber (NR), and modified natural rubber. Examples of the NR include deproteinized natural rubber (DPNR) and high purity natural rubber (HPNR). Examples of the modified natural rubber include epoxidized natural rubber (ENR), hydrogenated natural rubber (HNR), and grafted natural rubber. The NR may be rubber, such as SIR20, RSS#3, or TSR20, which is commonly used in the tire industry. Among them, NR or IR is preferably used, and NR is more preferably used.

When the rubber composition includes isoprene-based rubber, the content of the isoprene-based rubber per 100% by mass of the rubber component is preferably greater than or equal to 5% by mass and more preferably greater than or equal to 10% by mass. The content of the isoprene-based rubber is preferably not greater than 40% by mass and more preferably not greater than 30% by mass. When the content of the isoprene-based rubber is within the above-described range, the effect of the present invention can be more advantageously obtained.

The BR is not particularly limited, and examples of the BR include: high-cis BR such as BR730 and BR51 available from JSR Corporation, BR1220 available from Zeon Corporation, and BR130B, BR150B, and BR710 available from Ube Industries, Ltd., low-cis BR such as BR1250H available from Zeon Corporation, and BR (SPB-containing BR) containing 1,2-syndiotactic polybutadiene crystals (SPB), such as VCR412 and VCR617 available from Ube Industries, Ltd. Each of them may be used alone, or two or more of them may be used in combination. Among them, high-cs BR in which the content of cis is greater than or equal to 95% by mass is preferably used because the effect of the present invention can be more advantageously obtained.

When the rubber composition includes BR, the content of the BR per 100% by mass of the rubber component is preferably greater than or equal to 20% by mass and more preferably greater than or equal to 30% by mass. The content of the BR is preferably not greater than 60% by mass and more preferably not greater than 50% by mass. When the content of the BR is within the above-described range, the effect of the present invention can be more advantageously obtained.

The SBR is not particularly limited, and may be SBR, such as emulsionpolymerized styrene-butadiene rubber (E-SBR) or solution-polymerized styrene-butadiene rubber (S-SBR), which is commonly used in the tire industry. Among them, S-SBR is preferably used because the effect of the present invention can be more advantageously obtained.

When the rubber composition includes SBR, the content of the SBR per 100% by mass of the rubber component is preferably greater than or equal to 20% by mass and more preferably greater than or equal to 30% by mass. The content of the SBR is preferably not greater than 60% by mass and more preferably not greater than 50% by mass. When the content of the SBR is within the above-described range, the effect of the present invention can be more advantageously obtained.

In the rubber composition of the present invention, the total content of the isoprene-based rubber, the BR, and the SBR per 100% by mass of the rubber component is preferably greater than or equal to 80% by mass, more preferably greater than or equal to 90% by mass, and may be 100% by mass. When the total content thereof is less than 80% by mass, crack resistance and ozone resistance may be reduced.

In the present invention, in order to form a moderate amount of crosslinks in polymer chains, sulfur is used. Thus, the effect of the present invention is more advantageously obtained. The sulfur may be sulfur, such as powdered sulfur, precipitated sulfur, colloidal sulfur, insoluble sulfur, highly dispersible sulfur, or soluble sulfur, which is commonly used in the rubber industry. Each of them may be used alone, or two or more of them may be used in combination.

The content of sulfur per 100 parts by mass of the rubber component is preferably greater than or equal to 0.1 parts by mass, more preferably greater than or equal to 0.5 parts by mass, and even more preferably greater than or equal to 1.0 part by mass. When the content of sulfur is less than 0.1 parts by mass, the effect of the present invention may not be sufficiently obtained. The content of sulfur is preferably not greater than 6.0 parts by mass, more preferably not greater than 5.0 parts by mass, even more preferably not greater than 4.0 parts by mass, and particularly preferably not greater than 3.0 parts by mass. When the content of sulfur is greater than 6.0 parts by mass, steering stability, ozone resistance, discoloration resistance, and the outer appearance of the tire may be deteriorated.

In the present invention, carbon black is blended. Thus, reinforcing property can become good, and steering stability, crack resistance, and ozone resistance can become good.

The carbon black is, but is not particularly limited to, GPF, FEF, HAF, ISAF, SAF, or the like. Each of them may be used alone, or two or more of them may be used in combination.

A nitrogen adsorption specific surface area ($N_2SA$) of the carbon black is preferably greater than or equal to 20 $m^2/g$, more preferably greater than or equal to 50 $m^2/g$, and even more preferably greater than or equal to 80$m^2/g$. When the $N_2SA$ thereof is less than 20 $m^2/g$, reinforcing property may not be sufficiently obtained. The $N_2SA$ thereof is preferably not greater than 180 $m^2/g$ and more preferably not greater than 140 $m^2/g$. When the $N_2SA$ thereof is greater than 180 $m^2/g$, dispersion becomes difficult, and steering stability, crack resistance, and ozone resistance tend to be deteriorated.

The $N_2SA$ of the carbon black is obtained in compliance with JIS K 6217-2:2001.

The rubber composition includes carbon black. The content of the carbon black per 100 parts by mass of the rubber component is preferably greater than or equal to 2 parts by mass and more preferably greater than or equal to 10 parts by mass. When the content of the carbon black is less than 2 parts by mass, reinforcing property may not be sufficiently obtained. The content of the carbon black is not greater than 40 parts by mass. When the content of the carbon black is greater than 60 parts by mass, steering stability and ozone resistance tend to be deteriorated.

In the present invention, silica is preferably blended. When silica is blended, the outer appearance of the tire can be further improved. Silica is, but is not particularly limited to, dry silica (anhydrous silicic acid), wet silica (hydrous silicic acid), or the like, for example. Each of them may be used alone, or two or more of them may be used in combination. Among them, wet silica is preferably used because an amount of silanol group is great.

The nitrogen adsorption specific surface area ($N_2SA$) of silica is preferably greater than or equal to 50 $m^2/g$, more preferably greater than or equal to 100 $m^2/g$, and even more preferably greater than or equal to 150 $m^2/g$. When the $N_2SA$ thereof is less than 50 $m^2/g$, steering stability, crack resistance, and ozone resistance tend to be reduced. The $N_2SA$ of silica is preferably not greater than 250 $m^2/g$ and more preferably not greater than 210 $m^2/g$. When the $N_2SA$ thereof is greater than 250 $m^2/g$, dispersion becomes difficult, and steering stability, crack resistance, and ozone resistance tend to be deteriorated.

The $N_2SA$ of silica is measured by the BET method in compliance with ASTM D3037-93.

When the rubber composition includes silica, the content of silica per 100 parts by mass of the rubber component is preferably greater than or equal to 3 parts by mass, more preferably greater than or equal to 10 parts by mass, even more preferably greater than or equal to 20 parts by mass, and particularly preferably greater than or equal to 40 parts by mass. The content of silica is preferably not greater than 80 parts by mass and more preferably not greater than 60 parts by mass. When the content of silica is greater than 80 parts by mass, crack resistance, ozone resistance, discoloration resistance, and the outer appearance of the tire tend to be deteriorated. When the content of silica is within the above-described range, the outer appearance of the tire can be further improved, and reinforcing effect can be obtained.

When the rubber composition of the present invention has silica blended therewith, the rubber composition preferably includes a silane coupling agent as well as silica.

The silane coupling agent may be any silane coupling agent which is conventionally used together with silica in the rubber industry. Examples of the silane coupling agent include sulfide silane coupling agents such as bis(3-triethoxysilylpropyl)disulfide; mercapto silane coupling agents such as 3-mercaptopropyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. Each of them may be used alone, or two or more of them may be used in combination. Among them, a sulfide silane coupling agent is preferably used, and bis(3-triethoxysilylpropyl)tetrasulfide is more preferably used.

When the rubber composition includes the silane coupling agent, the content of the silane coupling agent per 100 parts by mass of silica is preferably greater than or equal to 2 parts by mass and more preferably greater than or equal to 5 parts by mass. When the content of the silane coupling agent is less than 2 parts by mass, steering stability, crack resistance, and ozone resistance tend to be reduced. The content of the silane coupling agent is preferably not greater than 20 parts by mass and more preferably not greater than 12 parts by mass. When the content of the silane coupling agent is greater than 20 parts by mass, it is less likely that the increase in cost leads to a proper increase in effect.

The rubber composition of the present invention preferably includes an antioxidant in order to inhibit crack from occurring and progressing due to ozone.

The antioxidant is not particularly limited. Examples of the antioxidant include naphthylamine antioxidants, quinoline antioxidants, diphenylamine antioxidants, p-phenylenediamine antioxidants, hydroquinone derivatives, phenol antioxidants (monophenol, bisphenol, trisphenol, and polyphenol antioxidants), thiobisphenol antioxidants, benzimidazole antioxidants, thiourea antioxidants, phosphite antioxidants, and organic thioacid antioxidants. Each of them may be used alone, or two or more of them may be used in combination. Among them, p-phenylenediamine antioxidants are preferably used because ozone resistance is good and the effect of the present invention can be more advantageously obtained.

Examples of p-phenylenediamine antioxidants include N-(1,3-dimethylbutyl)-N'-phenyl-p-phenylenediamine, N-isopropyl-N'-phenyl-p-phenylenediamine, N-1,4-dimethylpentyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine. Each of them may be used alone, or two or more of them may be used in combination. Among them, N-(1,3-dimethylbutyl)-N'-phenyl-p-phenylenediamine is more preferably used because ozone resistance is good, the effect of the present invention can be more advantageously obtained, and economic performance is also excellent.

When the rubber composition includes the antioxidant, the content of the antioxidant per 100 parts by mass of the rubber component is preferably greater than or equal to 0.5 parts by mass and more preferably greater than or equal to 1.0 part by mass. When the content of the antioxidant is less than 0.5 parts by mass, ozone resistance may not be sufficiently obtained. The content of the antioxidant is preferably not greater than 12 parts by mass, more preferably not greater than 10 parts by mass, and even more preferably not greater than 5.0 parts by mass. When the content of the antioxidant is greater than 12 parts by mass, an amount of blooming of the antioxidant increases and the outer appearance of the tire may be deteriorated.

The rubber composition of the present invention may have oil blended therewith. When oil is blended, processability is improved, the tire may become flexible, and the effect of the present invention can be more advantageously obtained. Examples of the oil include process oils, vegetable fats and oils, and mixtures of these. Examples of process oil include paraffinic process oils, aromatic process oils, and naphthenic process oils. Specific examples of paraffinic process oil include PW-32, PW-90, PW-150, and PS-32 available from Idemitsu Kosan Co., Ltd. Specific examples of aromatic process oil include AC-12, AC-460, AH-16, AH-24, and AH-58 available from Idemitsu Kosan Co., Ltd. Examples of vegetable fats and oils include castor oil, cottonseed oil, linseed oil, rapeseed oil, soybean oil, palm oil, coconut oil, peanut oil, rosin, pine oil, pine tar, tall oil, corn oil, rice bran oil, safflower oil, sesame oil, olive oil, sunflower oil, palm kernel oil, camellia oil, jojoba oil, macadamia nut oil, and tung oil. Each of them may be used alone, or two or more of them may be used in combination. Among them, the aromatic process oil is preferably used because the effect of the present invention is advantageously obtained.

When the rubber composition includes oil, the content of the oil per 100 parts by mass of the rubber component is preferably greater than or equal to 5 parts by mass, more preferably greater than or equal to 10 parts by mass, and even more preferably greater than or equal to 15 parts by mass. The content of the oil is preferably not greater than 60 parts by mass, more preferably not greater than 40 parts by mass, and even more preferably not greater than 30 parts by mass. When the content of the oil, which blooms itself on the surface of the tire, is within the above-described range, the blooming of the wax can be advantageously controlled, and the effect of the present invention can be more advantageously obtained.

The rubber composition of the present invention preferably includes vulcanization accelerator. Examples of vulcanization accelerator include sulfenamide vulcanization accelerators, thiazole vulcanization accelerators, thiuram vulcanization accelerators, thiourea vulcanization accelerators, guanidine vulcanization accelerators, dithiocarbamate vulcanization accelerators, aldehyde-amine or aldehyde-ammonia vulcanization accelerators, imidazoline vulcanization accelerators, and xanthate vulcanization accelerators. Each of them may be used alone, or two or more of them may be used in combination. Among them, sulfenamide vulcanization accelerators may be preferably used because the effect of the present invention can be more advantageously obtained.

Examples of sulfenamide vulcanization accelerators include N-tert-butyl-2-benzothiazolylsulfenamide (TBBS), N-cyclohexyl-2-benzothiazolylsulfenamide (CBS), and N,N-dicyclohexyl-2-benzothiazolylsulfenamide (DCBS). Each of them may be used alone, or two or more of them may be used in combination. Among them, TBBS is preferably used because the effect of the present invention can be more advantageously obtained.

When the rubber composition includes the vulcanization accelerator, the content of the vulcanization accelerator per 100 parts by mass of the rubber component is preferably greater than or equal to 0.3 parts by mass and more preferably greater than or equal to 0.5 parts by mass. The content of the vulcanization accelerator is preferably not greater than 5.0 parts by mass and more preferably not greater than 3.0 parts by mass. When the content of the vulcanization accelerator is within the above-described range, the effect of the present invention can be more advantageously obtained.

The rubber composition of the present invention may include, as appropriate, compounding agents commonly used in manufacturing of a rubber composition, such as zinc oxide, stearic acid, or tackifier, in addition to the above-described components.

The rubber composition of the present invention may be produced by using a known method, for example, by kneading the aforementioned components using a rubber kneading machine such as an open roll mill or a Banbury mixer, and then vulcanizing the mixture.

The rubber composition of the present invention is used as a rubber composition, for a tire, which is exposed to air in a use environment. Specifically, the rubber composition of the present invention is used as rubber composition for treads, rubber composition for sidewalls, rubber composition for clinches, and/or rubber composition for wings, which are used for treads, sidewalls, clinches and/or wings corresponding to tire components that form the surface (outer surface) of the tire, are exposed to air in a use environment, and are required to have good crack resistance and discoloration resistance.

The sidewall is a member that is disposed on the outer side of a case and extends from a shoulder portion to a bead portion. Specifically, the sidewall is a member shown in FIG. 1 of Japanese Laid-Open Patent Publication No. 2005-280612, FIG. 1 of Japanese Laid-Open Patent Publication No. 2000-185529, and the like.

The clinch is a rubber portion that covers a portion, below the sidewall, which contacts with a rim, and is also referred to as a clinch apex or a rubber chafer. Specifically, the clinch is a member shown in, for example, FIG. 1 of Japanese Laid-Open Patent Publication No. 2008-75066.

The wing is a member disposed between the tread and the sidewall in a shoulder portion. Specifically, the wing is a member shown in, for example, FIGS. 1 and 3 of Japanese Laid-Open Patent Publication No. 2007-176267.

The pneumatic tire of the present invention can be manufactured in a standard method by using the above-described rubber composition. That is, the rubber composition having the above-described components blended therewith is extruded and processed, in an unvulcanized state, so as to conform to the shapes of the tire members such as the tread, the sidewalls, the clinches, and the wings, and are formed together with other tire members in a tire forming machine in a standard method, to obtain an unvulcanized tire. The unvulcanized tire is heated and pressurized in a vulcanizer to obtain a tire.

The pneumatic tire of the present invention is used as, for example, a tire for a passenger car, a tire for a truck or bus, a tire for a two-wheeled automotive vehicle, and a high performance tire. In the description herein, the high-performance tire is a tire that is excellent particularly in grip performance, and conceptually includes a tire, for racing, used for a racing vehicle.

In the present invention, a method for evaluating crack resistance of the rubber composition is also provided.

As described above, the entirety of the wax that is blended in the rubber composition is not bloomed on the surface of the rubber. After the surface has been coated to some degree, the wax is no longer bloomed, and the film thickness is stabilized. The inventors of the present invention have found, as a result of study, that wax has an optimum temperature at which blooming of the wax is promoted, and the optimum temperature is lower than the melting point of the wax by 20 to 30°C. Further, as a result of an amount of blooming being studied by using various kinds of waxes, it is found that, in a case where the rubber composition including the wax is left at the optimum temperature for two weeks, the wax is sufficiently bloomed, and a film thickness can be stabilized.

Further, as a result of correlation between the film thickness of the wax and actual use in the market being studied, in a case where the rubber composition for a tire is left for two weeks at a temperature that is lower than the melting point of the wax by 20 to 30°C, correlation with a state observed after about two years have elapsed in the market can be obtained, and it has been found that the greater an amount of blended wax is, the greater the film thickness of the wax is, and the greater the film thickness of the wax is, the further whitening progresses, and, however, although, up to a certain degree of the film thickness, the greater the film thickness is, the better crack resistance is, the wax film is likely to crack when the film thickness is excessively great, thereby reducing crack resistance. Further, it has been found that, for a rubber composition, for a tire, including wax, and carbon black in an amount not greater than 40 parts by weight, in a case where, after the rubber composition for a tire has been left for two weeks in a constant-temperature container in which the temperature is lower than the melting point of the wax by 30°C, the film thickness of the wax bloomed on the surface from the rubber composition for a tire is 0.2 to 1.5 μm, good ozone resistance is assured and wax coating can be simultaneously prevented from cracking in actual use in the market, and crack resistance and discoloration resistance can be maintained good in the actual use in the market.

Therefore, in the present invention, the following method is provided on the basis of the above-described findings.

A method for evaluating a crack resistance of a rubber composition is provided, and the method includes: a first step of leaving the rubber composition including wax, and carbon black in an amount not greater than 40 parts by weight, for 14 days or more days, in a constant-temperature container in which a temperature is lower than a melting point of the wax by 20 to 30°C; a second step of measuring a film thickness of the wax bloomed on a surface from the rubber composition having been left; and a third step of evaluating a crack resistance of the rubber composition on the basis of the film thickness, of the wax, measured in the second step.

(Step 1)

In step 1, a rubber composition (sample to be measured) that includes wax, and carbon black in an amount not greater than 40 parts by weight to be measured is left, in a constant-temperature container in which a temperature (hereinafter, referred to as retained temperature) is lower than the melting point of the wax by 20 to 30°C, for 14 days or more days (preferably for 20 days or more days, more preferably for 30 days or more days). The constant-temperature container at the retained temperature represents the constant-temperature container at the retained temperature ± 2°C.

The constant-temperature container (oven) is not particularly limited, and may be any constant-temperature container that can maintain the temperature at the retained temperature. A forced circulation type heat aging test machine having an air circulator is more preferably used in order to increase contact between the rubber and air.

The capacity of the constant-temperature container is not particularly limited, and is preferably greater than or equal to 5 L and more preferably greater than or equal to 20 L. The capacity of the constant-temperature container is preferably not greater than 80 L so as not to inhibit an antioxidant concentration and temperature in the container from varying.

In a case where air circulation is performed in the constant-temperature container, the air speed is preferably higher than or equal to 0.25 m/s in order to promote blooming of the wax, and preferably not higher than 1.5 m/s in order to maintain correlation with deterioration in the rubber market.

The shape and the size of the rubber composition (sample to be measured) to be measured, are not particularly limited, and are preferably a rectangular parallelepiped, and more preferably a rectangular parallelepiped having the width of 5 to 30 mm, the length of 60 to 200 mm, and the thickness of 0.5 to 5 mm. The rubber composition to be measured may be an unvulcanized rubber composition or may be a vulcanized rubber composition. However, a vulcanized rubber composition is preferable because the effect of the present invention is more advantageously obtained.

(Sep 2)

In step 2, for the rubber composition that has been left in step 1, the film thickness of the wax bloomed, from the rubber composition, on the surface of the rubber composition is measured.

A method for measuring the film thickness of the wax bloomed on the surface of the rubber composition is not particularly limited, and is preferably a method in which an environmental scanning electron microscope (E-SEM) is used to observe the cross-section. At this time, the measurement field of view is preferably greater than or equal to 1 μm in consideration of variation in the film thickness of the wax.

(Step 3)

In step 3, the crack resistance of the rubber composition is evaluated on the basis of the film thickness, of the wax, measured in step 2. Thus, whether or not good ozone resistance can be assuredly obtained, and whether or not crack of wax coating can be prevented in the case of actual use in the market, are estimated on the basis of the measured film thickness of the wax. Thus, in the above-described method, whether or not a rubber composition has good crack resistance in a case where the rubber composition is actually used in the market, can be determined for evaluation, and crack resistance in the case of actual use in the market can be estimated with enhanced accuracy.

[Examples]

The present invention will be specifically described based on examples. However, the present invention is not limited to examples only.

Hereinafter, various chemicals used in examples and comparative examples will be collectively described.

natural rubber: RSS#3
SBR: NS116R available from Zeon Corporation (solution-polymerized SBR, bound styrene content: 23% by mass, Tg: -21°C)
BR: BR150B available from Ube Industries, Ltd. (cis content: 98% by mass) carbon black: Seast N220 available from Mitsubishi Chemical Corporation ($N_2SA$: 114 m$^2$/g) silica: ULTRASIL (registered trademark) VN3 available from EVONIK-DEGUSSA ($N_2SA$: 175 m2/g)

silane coupling agent: Si69 available from EVONIK-DEGUSSA (bis(3-triethoxysilylpropyl)tetrasulfide)

process oil (aromatic oil): process X-140 available from Japan Energy Corporation (aromatic process oil)

paraffin wax: OZOACE (registered trademark) 0355 available from NIPPON SEIRO CO., LTD. (melting point: 70°C)

antioxidant: NOCRAC (registered trademark) 6C available from Ouchi Shinko Chemical Industrial Co., Ltd. (N-(1,3-dimethylbutyl)-N'-phenyl-p-phenylenediamine)

stearic acid: stearic acid available from NOF CORPORATION

zinc oxide: "Zinc Oxide No. 1" available from Mitsui Mining & Smelting Co., Ltd.

sulfur: powdered sulfur available from Tsurumi Chemical Industry Co., Ltd.

vulcanization accelerator: NOCCELER (registered trademark) NS available from Ouchi Shinko Chemical Industrial Co., Ltd. (chemical name: N-tert-butyl-2-benzothiazylsulfenamide)

By using a 1.7 L Banbury mixer, natural rubber (20 parts), SBR (40 parts), BR (40 parts), the carbon black (20 parts), silica (50 parts), the silane coupling agent (5 parts), the process oil (20 parts), the paraffin wax (see amount of blended wax in Table 1), the antioxidant (1 part), stearic acid (2 parts), and zinc oxide (2 parts) were kneaded. Next, by using an open roll mill, sulfur (2 parts) and vulcanization accelerator (1 part) were added to the obtained kneaded product, and kneaded, to obtain an unvulcanized rubber composition. Next, the obtained unvulcanized rubber composition was press-vulcanized in a mold having the thickness of 2 mm at 170°C for 15 minutes, to obtain a vulcanized rubber composition (vulcanized rubber sheet). Further, the obtained unvulcanized rubber composition was formed so as to conform to the shape of the tread, and adhered to other tire components, and an unvulcanized tire was produced, and was vulcanized at 170°C to obtain a test tire.

An amount (% by mass) in Table 1 represents the content (% by mass) per 100% by mass of the rubber composition.

<Evaluation of vulcanized rubber composition>

The obtained vulcanized rubber composition was evaluated as follows, and the results are indicated in Table 1.

A sample having a rectangular shape with the width of 15 mm × the length of 120 mm was cut, as a test piece, from a rubber sheet having the thickness of 2 mm, and was left for two weeks in an oven at 40°C (which was lower than the melting point, of the wax, of 70°C by 30°C) (capacity of constant-temperature container: 64L, the air speed in the constant-temperature container: 1.0 m/s). Thereafter, the film thickness of the wax was measured as follows.

(Measurement of film thickness of wax)

The cross-section of the test piece having been left for two weeks, was observed by an environmental scanning electron microscope (E-SEM), and the thickness of the wax film formed on the surface of the test piece was measured with the measurement field of view of 10 μm.

(Outdoor exposure test)

The rubber test pieces were left for six months (from March to September) in an outdoor place (Kobe city in Hyogo Prefecture) exposed to sunshine, and a*, b* were thereafter measured by using a color difference meter, and, based on the obtained values, the rubber test pieces were evaluated and classified into five grades according to the following criteria. The greater the numerical value is, the less the whitening degree is. a* represents the intensity of red color and b* represents the intensity of yellow color. In a case where the numerical value is greater than or equal to three, it is determined that discoloration resistance is good.

(Criteria)

1:

$$-(a*+b*)\times 10 \leq -30$$

2:

$$-30 < -(a^*+b^*) \times 10 \leq -20$$

3:

$$-20 < -(a^*+b^*) \times 10 \leq -10$$

4:

$$-10 < -(a^*+b^*) \times 10 \leq 0$$

5:

$$-(a^*+b^*) \times 10 > 0$$

<Evaluation of crack resistance in market for test tire>

The test tire was used for two years, and, thereafter, crack resistance at a tread groove bottom was evaluated. The evaluation was performed such that the tire was visually confirmed, and the grades were determined as follows according to the length of crack. The results are indicated in Table 1.

A: No crack occurred.
B: A crack occurred but the length thereof was less than 1 mm.
C: The length of a crack was greater than or equal to 1 mm and less than 3 mm.
D: The length of a crack was greater than or equal to 3 mm.

[Table 1]

|  | Comparative example 1 | Example 1 | Example 2 | Comparative example 2 | Comparative example 3 |
|---|---|---|---|---|---|
| Amount of blended wax (% by mass) | 0.55 | 0.65 | 1.20 | 1.30 | 1.60 |
| Film thickness of wax ($\mu$m) | 0.1 | 0.3 | 1.4 | 1.6 | 2.0 |
| Outdoor exposure test | 5 | 5 | 4 | 2 | 1 |
| Crack resistance test in market | D | B | A | A | C |

In examples in which the film thickness of the wax that was bloomed on the surface from the rubber composition for a tire after the rubber composition for a tire was left for two weeks in the constant-temperature container in which the temperature was lower than the melting point of the wax by 30 °C, was 0.2 to 1.5 $\mu$m, crack resistance and discoloration resistance were good.

Comparison between examples and comparative examples indicates that the film thickness of the wax and the crack resistance in the market correlate with each other, and, when the film thickness of the wax is 0.2 to 1.5 $\mu$m, discoloration resistance, and crack resistance in the market are good.

Comparison between examples and comparative examples indicates that the greater an amount of the blended wax is, the greater the film thickness of the wax is, and the greater the film thickness of the wax is, the further the whitening processes, and, however, although, up to a certain degree of the film thickness, the greater the film thickness is, the better the crack resistance is, the wax film is likely to crack when the film thickness is excessively great, thereby reducing crack resistance.

## Claims

1. A rubber composition, for a tire, which is exposed to air in a use environment, wherein

   the rubber composition includes wax and carbon black,
   wherein the content of the carbon black per 100 parts by mass of the rubber component is not greater than 40 parts by weight, and
   after the rubber composition for a tire has been left for two weeks in a constant-temperature container in which a temperature is lower than a melting point of the wax by 30°C, a film thickness of the wax that is bloomed on a surface from the rubber composition for a tire is 0.2 to 1.5 $\mu$m, the melting point of the wax representing the maximum peak temperature of a heat flow curve obtained by measuring heat flow (mW/g) at a temperature rise rate of 5°C/min from -0°C to 100°C, using a differential scanning calorimeter (DSC).

2. The rubber composition for a tire, according to claim 1, which is exposed to air in a use environment, wherein a content of the wax per 100% by mass of the rubber composition is 0.6 to 1.25% by mass.

3. The rubber composition for a tire, according to claim 1 or 2, which is exposed to air in a use environment, wherein, after the rubber composition has been left outdoors for six months, a color difference (-(a*+b*)$\times$ 10) measured by using a color difference meter is greater than -20, wherein a* represents the intensity of red color and b* represents the intensity of yellow color.

4. Use of the rubber composition for a tire, according to any one of claims 1 to 3, as a rubber composition for a tread, a rubber composition for a sidewall, a rubber composition for a clinch, and/or a rubber composition for a wing.

5. A pneumatic tire having a tire member manufactured by using the rubber composition according to any one of claims 1 to 4.

6. The pneumatic tire according to claim 5, wherein the tire member is a tread, a sidewall, a clinch, and/or a wing.

7. A method for evaluating a crack resistance of a rubber composition according to any one of claims 1 to 3, the method comprising:

   a first step of leaving the rubber composition including wax, and carbon black in an amount not greater than 40 parts by weight, for 14 days or more days, in a constant-temperature container in which a temperature is lower than a melting point of the wax by 20 to 30°C;
   a second step of measuring a film thickness of the wax bloomed on a surface from the rubber composition having been left; and
   a third step of evaluating a crack resistance of the rubber composition on the basis of the film thickness, of the wax, measured in the second step.

## Patentansprüche

1. Kautschukzusammensetzung für einen Reifen, die in einer Verwendungsumgebung der Luft ausgesetzt ist, wobei

   die Kautschukzusammensetzung Wachs und Ruß umfasst,
   wobei der Gehalt des Rußes pro 100 Massenteile der Kautschukkomponente nicht größer als 40 Gewichtsteile ist, und
   nachdem die Kautschukzusammensetzung für einen Reifen für zwei Wochen in einem Behälter mit konstanter Temperatur aufbewahrt wurde, in dem eine Temperatur um 30°C niedriger ist als ein Schmelzpunkt des Wachses, eine Filmdicke des Wachses, das auf einer Oberfläche aus der Kautschukzusammensetzung für einen Reifen ausgeblüht ist, 0,2 bis 1,5 $\mu$m beträgt; wobei der Schmelzpunkt des Wachses die maximale Spitzentemperatur einer Wärmeflusskurve darstellt, die erhalten ist durch Messen des Wärmeflusses (mW/g) bei einer Temperaturanstiegsrate von 5°C/min von -0°C bis 100°C unter Verwendung eines dynamischen Differenzkalorimeters (DDK).

2. Kautschukzusammensetzung für einen Reifen nach Anspruch 1, die in einer Verwendungsumgebung der Luft ausgesetzt ist, wobei ein Gehalt des Wachses pro 100 Massenprozent der Kautschukzusammensetzung 0,6 bis 1,25 Massenprozent beträgt.

**3.** Kautschukzusammensetzung für einen Reifen nach Anspruch 1 oder 2, die in einer Verwendungsumgebung der Luft ausgesetzt ist, wobei, nachdem die Kautschukzusammensetzung für sechs Monate im Freien aufbewahrt wurde, ein Farbunterschied (-(a*+b*)×10), gemessen unter Verwendung eines Farbunterschied-Messgeräts, größer als -20 ist, wobei a* die Intensität roter Farbe und b* die Intensität gelber Farbe darstellt.

**4.** Verwendung der Kautschukzusammensetzung für einen Reifen nach einem der Ansprüche 1 bis 3 als eine Kautschukzusammensetzung für einen Laufstreifen, eine Kautschukzusammensetzung für eine Seitenwand, eine Kautschukzusammensetzung für ein Wulstband und/oder eine Kautschukzusammensetzung für einen Schulterstreifen.

**5.** Luftreifen, der ein Reifenteil aufweist, welches unter Verwendung der Kautschukzusammensetzung nach einem der Ansprüche 1 bis 4 hergestellt ist.

**6.** Luftreifen nach Anspruch 5, wobei das Reifenteil ein Laufstreifen, eine Seitenwand, ein Wulstband und/oder ein Schulterstreifen ist.

**7.** Verfahren zur Bewertung einer Rissbildungsbeständigkeit einer Kautschukzusammensetzung nach einem der Ansprüche 1 bis 3, wobei das Verfahren umfasst:

einen ersten Schritt des Aufbewahrens der Kautschukzusammensetzung, die Wachs, und Ruß in einer Menge von nicht mehr als 40 Gewichtsteilen, umfasst, in einem Behälter mit konstanter Temperatur, in dem eine Temperatur um 20 bis 30°C niedriger ist als ein Schmelzpunkt des Wachses, für 14 Tage oder mehr;
einen zweiten Schritt des Messens einer Filmdicke des auf einer Oberfläche der aufbewahrten Kautschukzusammensetzung ausgeblühten Wachses; und
einen dritten Schritt des Bewertens einer Rissbildungsbeständigkeit der Kautschukzusammensetzung auf der Grundlage der in dem zweiten Schritt gemessenen Filmdicke des Wachses.


## Revendications

**1.** Composition de caoutchouc destinée à un pneu, qui est exposée à l'air dans un environnement d'utilisation,

ladite composition de caoutchouc
comportant de la cire et du noir de carbone,
dans laquelle la teneur en noir de carbone pour 100 parties en masse de composant caoutchouc n'est pas supérieure à 40 parties en poids, et après que la composition de caoutchouc pour un pneu ait été gardée pendant deux semaines dans un récipient à température constante dans lequel la température est inférieure de 30 °C au point de fusion de la cire, une épaisseur de film de la cire qui s'est épanoui sur une surface à partir de la composition de caoutchouc pour un pneu est de 0,2 à 1,5 μm ; le point de fusion de la cire représentant le pic de température maximal d'une courbe de flux thermique obtenu en mesurant le flux thermique (mW/g) avec une vitesse d'augmentation de la température de 5 °C/min de 0 °C à 100 °C, en utilisant un calorimètre à balayage différentiel (Differential Scanning Calorimeter, DSC).

**2.** Composition de caoutchouc pour un pneu selon la revendication 1, qui est exposée à l'air dans un environnement d'utilisation, dans laquelle une teneur en cire pour 100 % en masse de la composition de caoutchouc est de 0,6 à 1,25 % en masse.

**3.** Composition de caoutchouc pour un pneu selon la revendication 1 ou la revendication 2, qui est exposée à l'air dans un environnement d'utilisation, dans laquelle, après que la composition de caoutchouc ait été laissée à l'extérieur pendant six mois, une différence de couleur (-(a* + b*) × 10), mesurée en utilisant un colorimètre différentiel, est supérieure à -20, où a* représente l'intensité de la couleur rouge et b* représente l'intensité de la couleur jaune.

**4.** Utilisation de la composition de caoutchouc pour un pneu, selon l'une quelconque des revendications 1 à 3, en tant que composition de caoutchouc pour une bande de roulement, une composition de caoutchouc pour un flanc latéral, une composition de caoutchouc pour un rivet, et/ou composition de caoutchouc pour une aile.

**5.** Pneumatique ayant un élément de pneu fabriqué en utilisant la composition de caoutchouc selon l'une quelconque des revendications 1 à 4.

6. Pneumatique selon la revendication 5, dans lequel l'élément de pneu est une bande de roulement, un flanc latéral, un rivet, e/ou une aile.

7. Procédé d'évaluation d'une résistance à la fissuration d'une composition de caoutchouc selon l'une quelconque des revendications 1 à 3, le procédé comprenant :

une première étape de conservation de la composition de caoutchouc comportant de la cire et du noir de carbone dans une quantité non supérieure à 40 parties en poids pendant 14 jours ou plus dans un récipient à température constante dans lequel une température est inférieure de 20 à 30 °C au point de fusion de la cire ;
une deuxième étape de mesure d'une épaisseur de film de la cire épanouie sur une surface à partir de la composition de caoutchouc ayant été conservée ; et
une troisième étape d'évaluation d'une résistance à la fissuration de la composition de caoutchouc sur la base de l'épaisseur de film mesurée dans la deuxième étape.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014012802 A
- KR 20050051007 A
- US 20140179853 A1
- JP 2005280612 A
- JP 2000185529 A
- JP 2008075066 A
- JP 2007176267 A